Europäisches Patentamt

European Patent Office    (11) Publication number:    **0 312 398**

Office européen des brevets    **A1**

# EUROPEAN PATENT APPLICATION

(21) Application number: 88309678.6

(22) Date of filing: 14.10.88

(51) Int. Cl.⁴: **H 02 K 5/12**
F 02 M 37/08, F 04 C 11/00

(30) Priority: 15.10.87 GB 8724181

(43) Date of publication of application:
**19.04.89 Bulletin 89/16**

(84) Designated Contracting States: **DE FR GB IT**

(71) Applicant: **Johnson Electric Industrial Manufactory Limited**
**Johnson Building 14-16 Lee Chung Street**
**Chaiwan (HK)**

(72) Inventor: **Strobl, Georg**
**26 Belleview Drive 19th Floor**
**Repulse Bay (HK)**

**Yu, Kwong-Kwan**
**Flat B. 10th Floor 24 Lin Shing Road**
**Chaiwan (HK)**

(74) Representative: **Luckhurst, Anthony Henry William et al**
**MARKS & CLERK 57-60 Lincoln's Inn Fields**
**London WC2A 3LS (GB)**

(54) **Fuel pump motor.**

(57) A PMDC fuel pump motor (1) comprises a casing (2) closed at one end by an end cap (7) carrying brushgear (11). An adapter (6) is mounted on the end cap (7) and has a port (17) for connection to a fuel supply line and an electrical connector (18) for connection to a power supply. Electrically conducting prongs (19) connect electrically with brushgear (11) carried by the end cap (7). The adapter (6) is attached to the motor (1) by resilient prongs (22) which project inside the casing (2) between a bearing support plate (8) and the casing (2), the prongs (22) having nibs (24) which engage in slots (25) in the casing (2). The adapter (6) is selected from a range of adapters, each having a port (17) and connector (18) to suit an automobile manufacturers requirements, whilst the remainder of the motor is common.

FIG.1.

Bundesdruckerei Berlin

EP 0 312 398 A1

**Description**

## FUEL PUMP MOTOR

The present invention relates to an electric motor for driving a fuel pump.

In automobiles it is common practice to drive a fuel pump, for supplying fuel to the carburettor or fuel injectors, by a permanent magnet DC electric motor. Typically the motor and fuel pump are mounted one on the other and fuel passes to or from the pump through the motor. The complete unit may be mounted in the fuel tank of the automobile.

Different automobile manufacturers use different coupling systems for coupling the fuel line and power supply leads to the motor. The practice heretofore has been to form on the motor end cap, which carries the motor brush gear, couplings which are dedicated to a particular manufacturers requirements. This means that the electric motor manufacturer must tool-up for the production of a wide variety of end caps, even though the basic motor itself is common to all requirements. Each end cap type must be individually designed to accommodate the required couplings without prejudicing the effective operation of the motor.

The present applicants have realised that this drawback can be overcome by providing an interface between the automobile manufacturers fuel line and power supply leads and the electric motor. In this way the motor end cap design can be optimised with respect to the motor operation, for example the thermal and structural stability of the end cap, whilst a variable design for power supply and fuel supply parts is utilised.

The present invention provides a fractional horsepower permanent magnet direct current fuel pump motor having a casing closed at one end by an end cap, the end cap carrying brushgear arranged to supply current to a commutator of a rotor mounted in the casing, the casing and end cap being arranged for the passage therethrough of fuel, wherein an adapter is mounted on the end cap for connection of a fuel line and a power supply to the motor.

Other, preferred features and advantages of the invention will be apparent from the following description and the accompanying claims.

The invention will be further described by way of example with reference to the accompanying drawings, in which:

Figure 1 is a cross-sectional view through a fractional horsepower PMDC fuel pump motor forming an embodiment of the invention;

Figure 2 is a sectional view of an adapter of the motor of figure 1;

Figure 3 is an inside plan view of the adapter of figure 2;

Figure 4 is an outside plan view of the adapter of figure 2;

Figure 5 is a detailed partly cut-away side view of an end cap of the motor of figure 1;

Figure 6 is a plan view of a brushgear carrying part of the end cap of figure 5; and

Figure 7 is a plan view of bearing plate forming part of the end cap of figure 5.

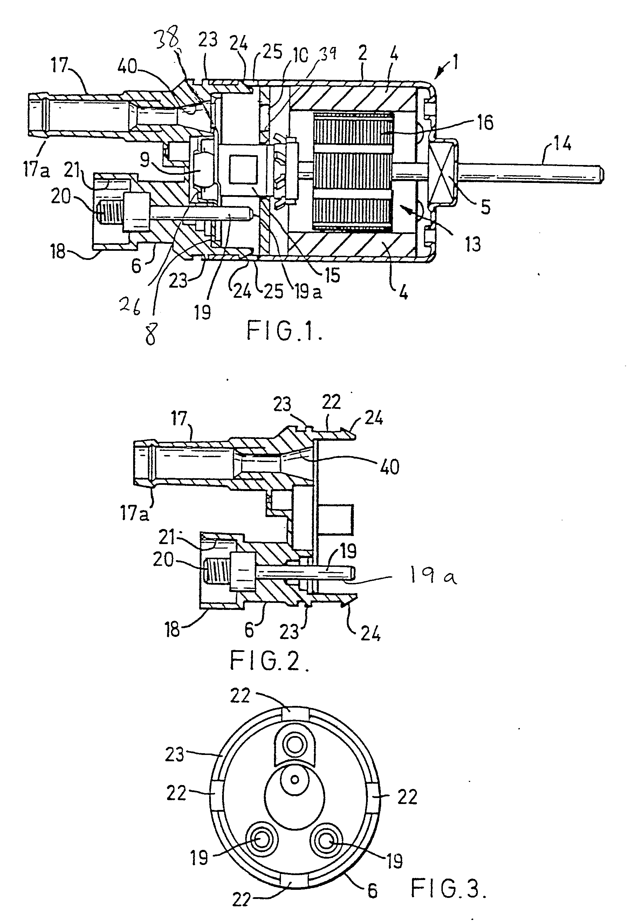

Figure 1 is a schematic cross-sectional view through a fractional horsepower PMDC motor for driving a fuel pump. The motor 1 comprises a deep drawn can-like steel casing 2 closed at one end and open at its other end. The casing 2 carries a bearing 5 at its closed end and a pair of permanent magnets 4. An adapter 6 is attached to the casing 2 and encloses an end cap 7 mounted on the casing 2. The end cap 7 is in two parts and comprises a bearing support part 8 (Figure 5) carrying a bearing 9, and a brushgear plate 10 carrying brushgear 11 in the form of two caged brush assemblies 12a, 12b. A rotor 13 comprises a shaft 14 mounted in the bearings 5, 9 and carrying a commutator 15 and wound armature coils 16. The brush assemblies and other details of brush support part 10 are omitted from Figure 1 for clarity.

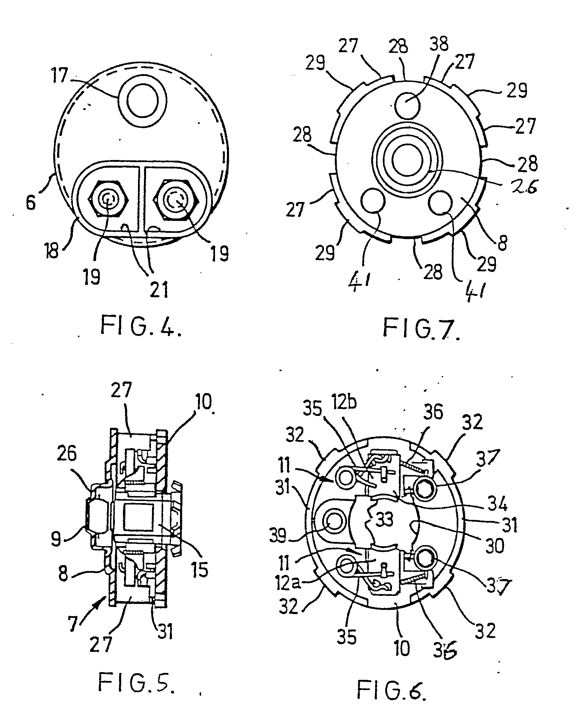

The adapter 6 which forms a particular feature of this invention is shown in detail in figures 2, 3 and 4. The adapter 6 is moulded from fuel resistant plastics material and comprises a tubular port 17 having an end 17a which is adapted for connection to a fuel supply line. The end 17a is chosen to suit the requirements of an end user and it is a feature of this invention that a range of adapters 6 is utilised by the electric motor manufacturer, each adapter having one of a number of different port ends 17a. The adapter 6 also comprises an electrical connector 18. In the example shown connector 18 comprises a pair of electrically conducting prongs 19 which extend through apertures in the connector 18 into the end cap assembly 7. Outer ends 20 of the prongs 19 project into an open housing 21 for receiving a complimentary connector of a power supply lead (not shown). Again, the connector 18 is chosen to suit the requirements of the end user and a range of adapters is utilised, each having a particular connector 18.

The adapter 6 has four resilient prongs 22 depending away from the port 17 and connector. These prongs serve to mount the adapter 6 on the casing 2, the casing abutting against a flange 23. Each prong 23 has a nib 24 which projects into a slot 25 in the casing wall, thus securing the adapter 6 on the casing 2.

The bearing support part 8 fits between the prongs 22. The bearing support part 8 is of plastics material and has a central boss 26 supporting the bearing 9. The bearing 9 is held in the boss 26 by means of an annular resilient metal clip (not shown) in a manner known in the art. Four arcuate walls 27 extend axially from the periphery of the support part 8 and define between them gaps 28 in which the prongs 22 are received. Raised ribs 29 are formed on the outside of the walls 27 and these fit in axially extending slots (not shown) in the casing 2 to locate the support 8 against circumferential movement and also against axial movement away from the adapter 6, the slots extending from the open end of the casing 2.

The brush support part 10 is also of plastics material. It is generally disc shaped and has a central cutout 30 through which the commutator 15 projects. The brush assemblies 12a, 12b are of conventional configuration and are mounted on the part 10. Circumferential walls 31 extend from the part 10 to abut the walls 27 of part 8. Ribs 32 are formed on the outside of the walls 31 and these align with the ribs 29 of the bearing suppport part 8 and are received in the same slots in the casing as the ribs 29.

Each brush assembly 12a, 12b comprises a brush 33 housed in a cage 34 and urged inwardly, towards the commutator 15, by a spring 35. The brushes 33 are connected by wires 36 to conducting cylindrical sleeves 37 mounted on the support 10. The sleeves 37 receive the inner ends 19a of the prongs 19 for supplying current to the brushes 33.

Aperture 38, 39 are formed in the bearing support part 8 and brush support part 10, in axial alignment with a flared inner end 40 of the tubular part 17.

Apertures 41 are formed in the bearing support part 8 in axial alignment with the sleeves 37.

To assemble the motor, the magnets 4 and bearing 5 are mounted in the casing 2 and the rotor 13 positioned in the casing. The brush support part 10 is mounted in the open end of the casing 2 and then the bearing support part 8. A selected adapter 6 is then snap fitted on the casing end over the end cap assembly, the prongs 22 passing through the gaps 28 between the part 8 and the casing wall, the ribs 24 clipping into the slots 25 in the casing wall. Ends 19a of prongs 19 pass through the apertures 41 in the bearing support part 8 and are received in the sleeves 37 to make electrical contact with respective brushes 33. The adapter 6 thus holds the bearing support part 8 and brush support part 10 on the casing end.

In a particularly preferred form, the casing end may be swaged over adjacent the slots (not shown) receiving the ribs 29, 32, to hold the parts 8, 10 securely on the casing 2. The motor 1 may then be stored and the adapter 6 fitted as and when desired.

The adapter 6 can thus be selected from one of a range of adapters having differing fuel connection parts 17 and electrical connectors 18. The adapters need only be provided with a common arrangement of prongs 24 and pins 19 to fit on the motor casing 2. The motor manufacturer can thus utilise a single motor design, varying only the adapters 6 to tailor the motor to the customers requirement.

In use, a fuel pump may be mounted on the shaft 14 with its outlet mated to an armature on the closed end of the casing 2. The fuel passing between the magnets 4 and through the apertures 39, 38 to the port 17.

Various modifications may be made to the described embodiment and it is desired to include all such modifications as fall within the scope of the accompanying claims.

## Claims

1. A fractional horsepower permanent magnet direct current motor having a casing (2) closed at one end by an end cap (7), the end cap (7) carrying brushgear arranged to supply current to a commutator (15) of a rotor (13) mounted in the casing (2), the casing (2) and end cap (7) being arranged for the passage therethrough of fuel, characterised in that an adapter (6) is mounted on the end cap (2) for connection of a fuel line and a power supply to the motor.

2. A motor as claimed in claim 1, characterised in that the adapter (6) is selected from a range of different adapters, each adapter (6) having common connection means (22) for connecting the adapter (6) to the end cap (7), a port (7) for connection to a fuel line and an electrical connector (18) for connection to a power supply, the combination of the port (17) and electrical connector (18) of a respective adapter (6) being different for each adapter in the range and specific to an end users requirements.

3. A motor as claimed in claim 2, characterised in that each said electrical connector (18) includes common electrical connection means (19) electrically connecting the electrical connector (18) to the brushgear (12).

4. A motor as claimed in claim 3, characterised in that the common electrical connection means comprises a pin (19) which in use, extends within an aperture in the end cap to contact a conductor (37) electrically connected to the brushgear (12).

5. A motor as claimed in claim 2, 3 or 4, characterised in that each said port (17) for connection to a fuel line is aligned with an aperture (38, 39) provided in the end cap for the flow therethrough of fuel.

6. A motor as claimed in claim 1, characterised in that the adapter (7) is attached directly to the motor casing (2).

7. A motor as claimed in claim 6, characterised in that the adapter (7) is attached to the casing (2) by means of a plurality of resilient prongs (22) each having a rib (24) which engages in a respective recess or aperture (25) in the casing wall.

8. A motor as claimed in claim 7, characterised in that the prongs (22) each extend through a respective gap (28) formed between the end cap and the casing wall.

9. A motor as claimed in claim 8, characterised in that the end cap (7) comprises a first part (8) carrying a bearing (9) for a shaft (14) of the rotor (13) and a second part (10) carrying the brushgear.

10. An adapter for connecting a fractional horsepower direct current motor to a fuel supply line and a power supply, the adapter comprising a port for connection to a said fuel supply line, an electrical connector for connection to a power supply and to brush gear of a motor, said brush gear being mounted on an end cap of the motor, and means for mounting the adapter on the end cap of the motor.

FIG.1.

FIG.2.

FIG.3.

FIG.4.

FIG.7.

FIG.5.

FIG.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 251 374  (SAVARA)<br>* Page 4, line 25 - page 5, line 17; figures 1,2 * | 1,5,6,9 ,10 | H 02 K   5/12<br>F 02 M   37/08<br>F 04 C   11/00 |
| Y | | 2-4 | |
| Y | US-A-2 916 177  (NOTTELMANN et al.)<br>* Column 2, lines 40-61; figures 1,2 * | 2-4 | |
| X | DE-A-3 438 680  (HITACHI)<br>* Page 7, lines 15-27; figures 1-3D * | 1,6,9, 10 | |
| A | | 2-4 | |
| A | FR-A-1 551 840  (COMPAGNIE ELECTRO-MECANIQUE)<br>* Page 1, right-hand column, lines 16-33; figure 4 * | 7,8 | |

TECHNICAL FIELDS SEARCHED (Int. Cl.4)

H 02 K
F 02 M
F 04 C

The present search report has heen drawn up for all claims

| Place of search | Date of completion of the search | Examiner |
|---|---|---|
| THE HAGUE | 09-01-1989 | TIO K.H. |

EPO FORM 1503 03.82 (P0401)